# EUROPEAN PATENT APPLICATION

(11) **EP 1 860 015 A1**
(43) Date of publication of application: **28.11.2007**
(21) Application number: 06008969.5
(22) Date of filing: 28.04.2006
(51) Int. Cl.: B62B 15/00, B63B 7/08, B63B 35/73, B63B 35/81

(54) **Inflatable sports device**

(71) Applicant: HAMAX AS, 1679 Krakeroy (NO)
(72) Inventor: Sorby, Even Helley Hansen, 1555 Son (NO)
(74) Representative: Popp, Eugen

(57) **Abstract**

Many people enjoy outdoor sports, both in summertime and wintertime. During the summer, water sports are very popular; during the winter, snow related sports come into season. Inflatable sports devices (1) are particularly useful, as they can readily be transported from the user's home to the place of use. Whilst for many years, inflatable water sports devices have been known in the form of dinghies and rafts, only recently have these also been used in winter sports, such as sledging. The current invention, relates to an inflatable sports device (1), which is further integrated with guiding ribs (30) provided on the underside (22) of side regions (3) of the device (1). In particular, these side regions (3) are formed such that they do not continuously contact the underlying surface of the device (1), and therefore provide for enhanced steering control.

## Description

### INTRODUCTION

Outdoor sports are enjoyed by a great many people, both in summertime and wintertime. During summertime, people often enjoy spending time in the fair weather and in particular water sports are very popular. In many parts of the world during wintertime, significant snowfall occurs, which allows people to enjoy the winter sports such as skiing and sledging. Whilst it has been known for many years, that inflatable devices such as dinghies and rafts can be used on water, only more recently has this technology been applied to winter sports such as sledging.

The present invention relates to an inflatable device, which is intended to be used on water and/or snow depending upon the season. Traditionally, sledges or sleighs for use in snow conditions, have been provided either by solid wooden construction devices or more recently preformed plastic devices. Whilst these have the advantage of both durability and ease of construction, significant difficulties are encountered when attempting to transport wooden or plastic preformed sledges to the site of use. In particular, if several people are going to enjoy a day of winter sport, either a limited number of wooden and/or plastic sledges can be taken, or multiple means of transport are required.

Provision of an inflatable sports device, as in the current invention, addresses the problem surrounding transporting large often bulky and sometimes cumbersome sledges or sleighs. Furthermore, it is often the case that the user of the sledge or sleigh during wintertime, or the inflatable device during summertime, will not be able to obtain transport, such as car, taxi or any other similar transport, directly to the point of use of the sports device. Therefore, provision of an inflatable device will allow the user to readily carry the sports device from the mode of transport to the place of use.

US 4,206,933, discusses an inflatable sleigh, which is possessed of an improved body. This document discloses an inflatable sports device, which is possessed of numerous inflatable elongate tubular elements. On the underside of these elements, are provided a series of ribs which are designed to improve the running of the sports device on snow. Similarly, US 2003/0098558, also discloses a sports device which is possessed of multiple inflatable tubes. This document discusses the use of multiple inner inflatable members, for improving the stability and strength of the sports device. Additionally, it is disclosed that a series of tracks or ribs on the underside of the sports device can be provided to improve its running. Neither of the above documents, fully addresses the problems associated with attempting to turn the sports device during use. In particular, the ribs provided on the underside of the sports devices according to the above prior art documents, are primarily related to simple improvement in the running of the devices.

It is an object of the current invention, to provide an improved sports device for use on both snow and water, which has improved turning capabilities.

The abovementioned problem is solved by the invention according to claim 1, with preferred embodiments discussed in dependent claims thereof.

Claim 1 in particular, discloses the use of an inflatable sports device which comprises multiple tubular elements in both the body and side regions. These tubular elements are possessed of upper and lower surfaces, with the upper surface providing a user supporting surface and the lower surface of the tubular elements being intended to run on the underlying surface. In particular, tubular elements which make up the side regions of the sports device, are intended to not provide a lower surface which is in constant contact with the underlying surface, and therefore provide an improved mechanism for steering the device.

It is preferably possible for the tubular elements making up both the body and side regions of the device to be interconnected to provide one inflatable cavity. Alternatively, it is also possible for each of the tubular elements to be individually enclosed, therefore for inflation of the device each of the tubular elements must be filled individually.

A further preferred embodiment provides the tubular elements which make up the side region of the sports device, being positioned at an angle with respect to the tubular elements making up the body region. This angle will then lead to the lower surfaces of the tubular elements making up the side regions being raised from the underlying surface of the device when in normal use.

It is also preferably possible for the tubular elements making the body region to be of equal size to each other, whereas the tubular elements making up the side regions can be a different size from these. In particular, the tubular elements of the side regions may be any one or more than one of shorter than the main body tubular elements, narrower in the vertical direction than the main body tubular elements, and profiled to be wider at the front of the device and tapering off towards the rear of the device.

In a further preferred embodiment the underside of the tubular elements making up the side and main body regions, are provided with a series of ribs which are provided to improve the running characteristics of the sports device in use. Furthermore, it preferably possible for these ribs to be provided by a separate ribbed material. This ribbed material, could be provided integrally with the under surface of the sports device, or could be provided as a separate layer which is affixed to the underside of the sports device after manufacture.

It is preferred that the ribs which form the underside surface of the main body tubular elements, are parallel with the direction of movement of the device. It is further preferred, that the ribs on the underside surface of the tubular elements making up the side regions are formed at a angle with respect to the motion of travel of the device.

In particular, the angle of the ribs on the underside of the side body tubular elements, lies in the range of 5° to 35° with respect to the direction of motion of the sports device. In particular, the angle of the ribs on the underside of the tubular elements making up the side region, could lie between approximately 5° - 10°; approximately 10° - 15°; approximately 15° - 20°; approximately 20° - 25°; approximately 25° - 30°; approximately 30° - 35°.

It is furthermore preferable that the ribs formed on the underside surface of the sports device, have a width lying in the region of between 2mm and 7mm, and they have a depth in the region of 2mm to 7mm. It is also possible, for the width and depth to be of different dimensions from each other. A further preferred embodiment, provides the ribs on the underside surface of the side body tubular elements with widths in the region of 10mm to 25mm, and depths in the region of 10mm to 25mm. Again, the widths of these ribs need not be the same as the depths.

In order to improve the handling of the device and ease of use, handles may be provided on the upper surfaces of one or more of the tubular elements making up the main body region. Furthermore handles are preferably provided on the upper surfaces of the tubular elements making up the side body regions; such handles are useful for improving the turning characteristics of the device when in use.

The sports device as discussed above, is intended to be that of an inflatable sled or sleigh for use on snow and/or water. Furthermore, it is intended that the device be made from a durable plastic material, such as low density polyurethane (PE), high density polyurethane (PE), poly-vinyl-chloride (PVC) or polyamide (PA).

**Figure 1** shows a perspective view of the inflatable sports device according to the present invention.

**Figure 2** shows numerous views, that of upper, lower, side and front and back of the inflatable sports device according to figure 1.

**Figure 3** details the direction of the ribs provided on the underside surface of the inflatable sports device according to figures 1 and 2.

**Figure 4** shows a cross-sectional view of the ribs provided in the main body region of the sports device.

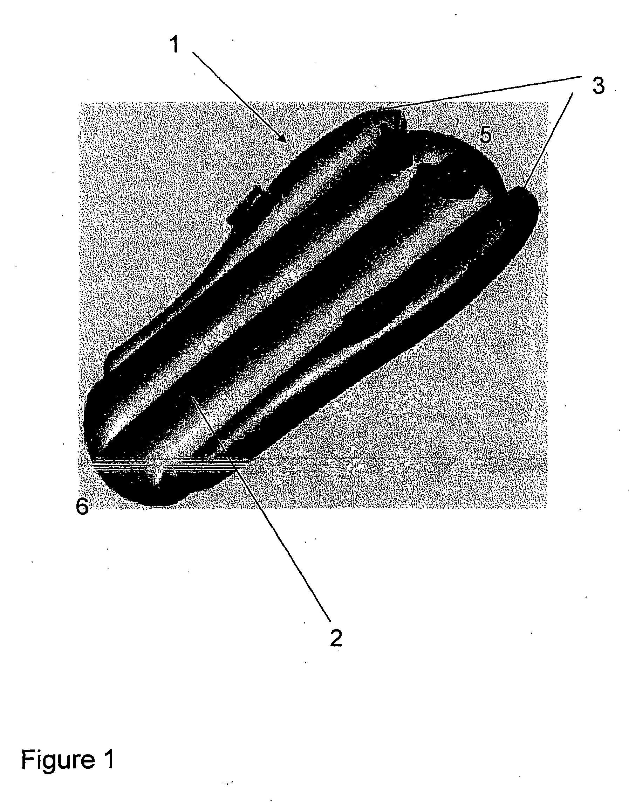

Figure 1 shows in perspective view, the general structure of the sports device 1 according to the invention. The sports device 1, as shown in the figure, is that of an inflatable sleigh or sled which is intended to be used on snow and/or water. Not only does making the sports device 1 inflatable improve its buoyancy if used on water, but it also allows the device 1 to be packed away into a small bag or carrier for ease of transportation by the user. Additional advantages of making the sports device 1 inflatable, are that the weight of the device is approximately constant whether inflated or packed, and the sports device 1 can be transported from a car or the like to the specific point of use more readily prior to inflation. This is particularly useful when used in poor weather conditions, and especially with wind.

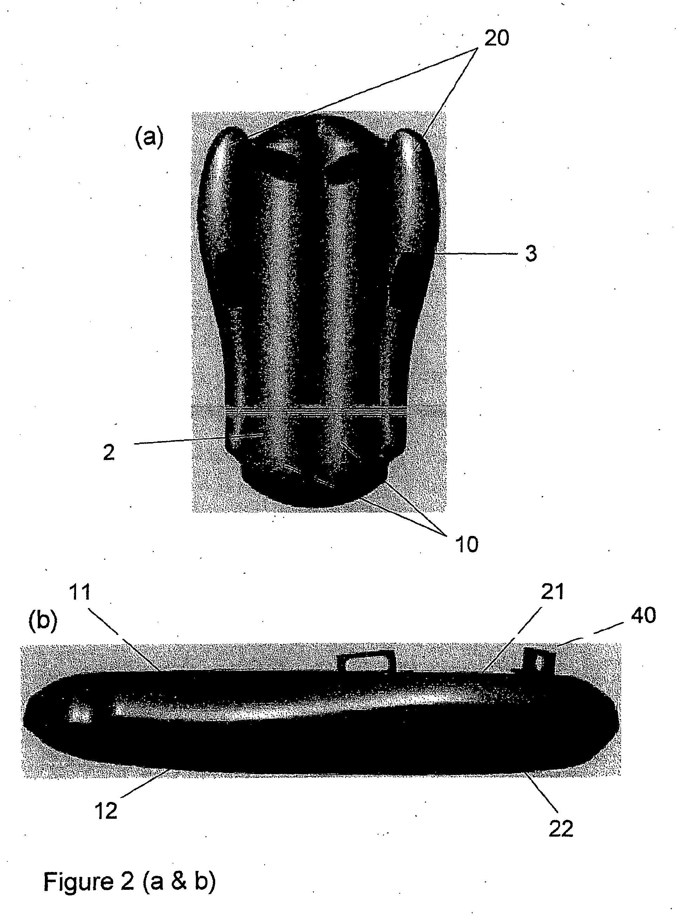

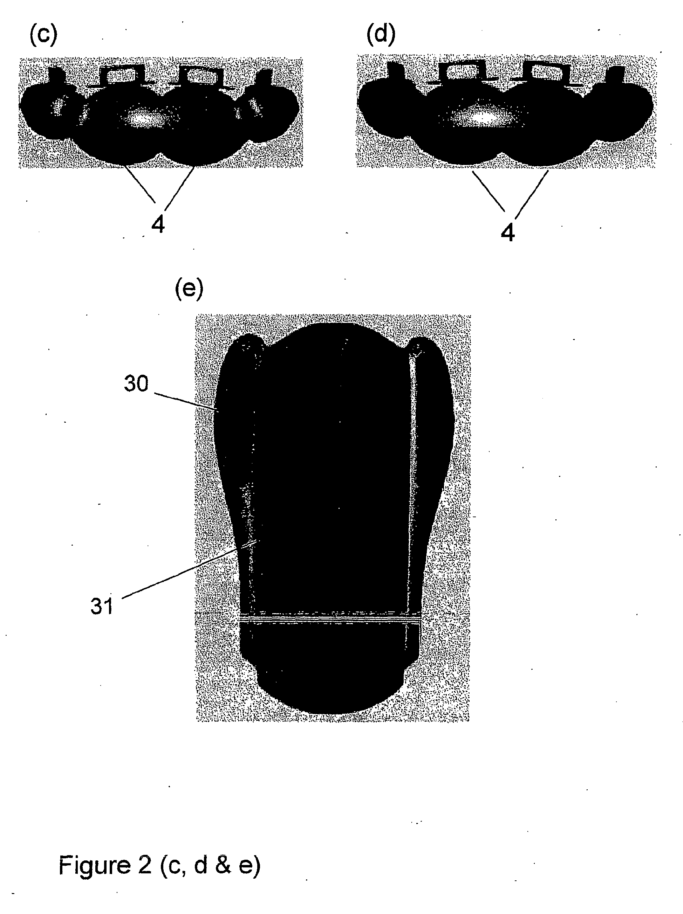

Looking at Figure 1, the sports device is shown to have a central body region 2, and side regions 3, either side of this body region 2. Looking further at Figure 2, in particular Figure 2a wherein a top view of the device 1 is shown, it can be seen that the body region 2 is possessed of a plurality of inflatable tubular elements 10. In Figures 1 and 2, two inflatable tubular elements 10 are shown making up the body region 2, however it is to be understood that this is an example only and any number of tubular elements 10 can be used as required. Furthermore, the side regions 3 are shown in each of these figures as being possessed of additional inflatable tubular elements 20. Once again, the side regions 3 are shown with one tubular element 20 either side of the body region 2, however it is possible to provide further side tubular elements 20, if required.

The central body region 2, provides a user supporting surface on which the user of the sled or sleigh sits or lies depending upon the mode of operation. The body region tubular elements 10 are possessed of upper 11 and lower 12 surfaces, the upper surface 11 being provided as the user supported surface. Additionally, the lower surface 12 of the body region 2, is used to support the device 1 on the snow or water. As with the tubular elements 10 making up the body region 2, the tubular elements 20 making up the side regions 3 are also possessed of upper 21 and lower 22 surfaces. Once again the upper surface 21 of the side tubular element 20, can be used as further supporting means for the user of the device 1. As can be seen most clearly, in Figures 2c and d, the lower surface 22 of the side tubular element 20 is not intended to be in permanent contact with the underlying surface whilst the device is in use.

Whilst the device 1 is in use, it is quite desirable for the user to be able to steer to the left or right whilst moving. This is achieved by providing the two lower surfaces 22 of the side tubular elements 20 raised from the lower surface of the tubular element 10 making up the main body region 2. Whilst the device is in use, and the user is lying or sitting on the upper surface 11 of the body region 2, application of a downward force on the upper surface 21 of either of the side tubular elements 20, will force the lower surface 22 into either the snow or water of the supporting surface. Such an action is intended to increase the friction on the underside of the device 1 in general, and will lead to the device turning either to the left or right dependent upon which side region 3 of the device 1 was depressed.

Looking at Figures 2c and 2d, the side tubular elements 20 are shown positioned at an angle with respect to the tubular elements 10 making up the main body region 2. This is desirable, as it allows for the device to flex in use, and more readily allow whichever of the side tubular elements 20 is being depressed into the underlying surface. This however, could also be achieved by simply providing the side tubular elements 20 with a narrower profile such that they do not reach the same point as the lower surface 12 of the main body tubular elements 10. Additionally, as is shown in Figures 1 and 2, the tubular elements 20 making up the side regions 3, can be profiled such that they are wider at the front of the device 5, and taper off towards the rear of the device 6. This is of course one of a multitude of design options, and is shown by way of example only. It is quite clear, that the tubular elements 20 making up the side regions 3, could also be possessed of more uniform elongate tubular elements. Furthermore, the side tubular elements 20 as seen in Figures 1 and 2, are shown to be generally narrower than the tubular elements 10 making up the body region 2; once again, this is shown merely as an example, and it is possible for the side region tubular elements 20 to be possessed of the same dimensions as the main tubular elements 10. Finally, the side region tubular elements 20 are shown to be shorter than the body region tubular elements 10, again this is purely an option, and these elements may be provided the same length as each other. As shown in Figures 2c and 2d, the tubular elements 20 making up the side regions 3 are shown to be generally narrower in the vertical direction, although again this is merely as an example, and it is possible for these tubular elements to be possessed of the same width as the main body tubular elements 10. It is, however, preferable to provide the tubular elements 20 in the side regions 3 with such a reduced vertical profile, such that the upper surfaces 11, 21 of both the main body region 2 and side regions 3 are substantially the same height, such that the user of the device is presented with a larger supporting region. Additionally, provision of narrower tubular elements 20 in the side regions 3, allows for more control when using the side elements 3 for steering of the device 1.

On the underside of both the main tubular elements 10 and the side tubular elements 20, a series of ribs 30 may be provided in order to improve the running of the sports device 1. The positioning of these ribs 30 can be most readily seen from Figure 2e. As is quite clear, it is preferable for the majority of the under surface 12 of the main tubular elements 10 to be possessed of such guiding ribs 30. As is also seen in Figure 2e, the wider section of the tubular elements 20 making up the side regions 3 are also possessed of these guiding ribs 30. Clearly, however, if the side tubular elements 20 were of an elongate design along the full length of the sports device 1, the whole underside surface 22 of such tubes 20 could be possessed of such ribs 30. Preferably, the ribs 30 on the underside of the sports device 1, are provided by use of a specific ribbed material 31. This ribbed material 31, can be integrally formed with the underside surface 12, 22 of the device 1, or could be attached by means of an appropriate adhesive or other attachment means, to the device after production of the inflatable section.

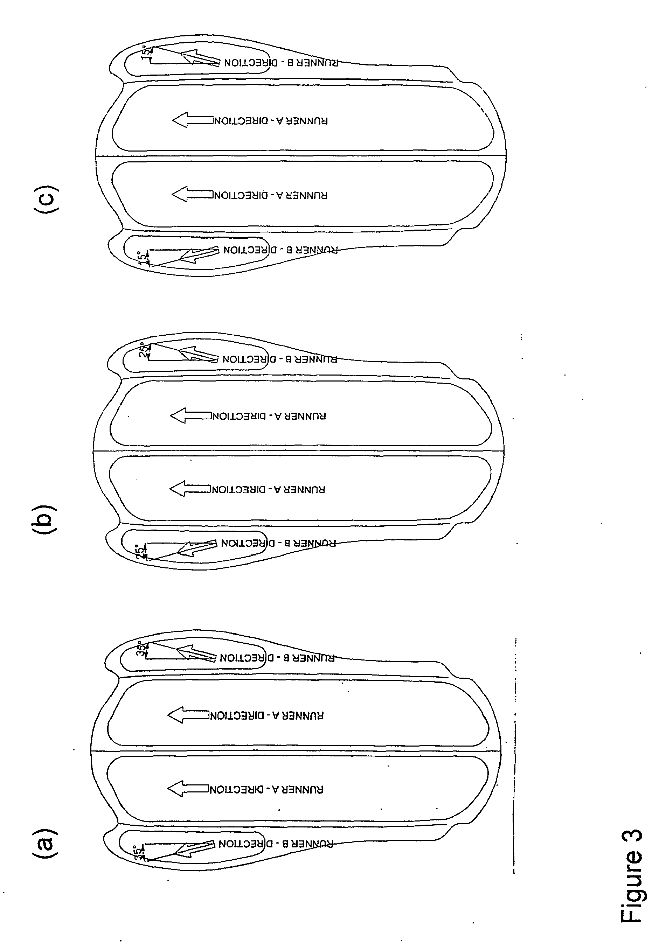

As is most clearly seen in Figure 3, the ribs 30 provided on the tubular elements 10 making up the body region 2, are intended to run parallel with the direction of travel of the sports device 1. Such a provision of parallel ribs, will allow the device to be reliably guided in a straight line on either the snow or water surfaces. As is shown in the series of Figures 3a to 3c, the ribs 30 provided on the underside of the side region tubular elements 20, may not be provided in the direction parallel with the direction of motion of the device 1. Provision of ribs on the underside surface 22 of the side region tubular elements 20 at an angle with respect to the motion of travel of the device 1, will substantially improve the turning characteristics of the device 1 when in use. As is shown in the three diagrams of Figure 3, it is possible for the angle of the ribs 30 on the underside 22 of the side region tubular elements 20 to vary. Whilst three values, those of 15°, 25° and 35°, are shown in this figure, this is by example only. Clearly any appropriate angle between the ribs 30 on the underside of the side tubular elements 20 and the direction of travel of the device 1 can be provided as desired. In particular, however, it is intended that the angle of the ribs 30 on the underside surface 22 of the side tubular elements 20 lies the range of 5° to 35°. When the ribs 30 lie in this range of angles, the device can be more successfully and stably turned when in use. When the ribs 30 lie at an angle closer to 5°, the sports device 1 is more controllable at higher speeds of travel. That is, the angle does not want to be too steep for high speed use, as when the ribs 30 are engaged they will tend to cause the sports device 1 to turn too steeply and thereby lose control. If the ribs 30 are angled closer to 30° or even 35°, the sports device 1 is highly manoeuvrable, and is particularly adapted for slalom type action. That is, it is anticipated that different designs of sports device 1 with different angles of the ribs 30, will be available for production and purchased based on the users intended final use.

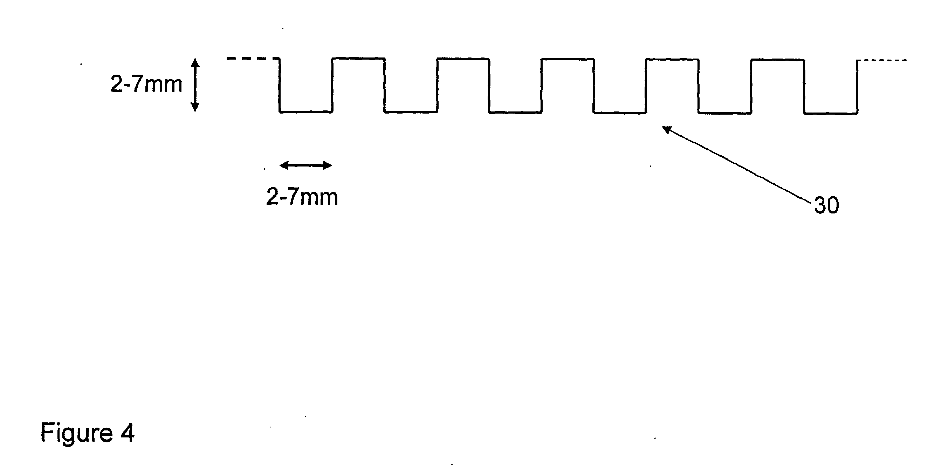

It is preferably possible, but not necessary, to provide the ribs 30 on the underside of the main tubular elements 10 as a great many low profile ribs 30. For example, Figure 4 shows a cross-section of a ribbed material 31 which could be used for provision of the ribs 30 on the underside surface 12 of the main tubular elements 10. Whilst Figure 4 shows that the ribs 30 are uniform this is by way of example only, and any appropriate figure can be chosen for the ribs 30 on the underside of the tubular elements 10 making up the body region 2. For instance the ribs could be between 2 - 7 mm wide and 2 - 7mm deep, with any combination of width and depth. It is possible to provide the ribs 30 according to Figure 4 on the underside surface 22 of the side tubular elements 20. It is more preferable, however, to provide the ribs 30 on the side tubular elements 20 with a substantially deeper and wider profile. In particular, this profile could be that of ribs 30 which are 15mm wide and approximately 15mm deep. The provision of such large ribs 30 in the steering region of the device 1, i.e. that of the underside surface 22 of the side tubular elements 20, is that a more controllable turning force will be generated when the device is in use. Clearly the figures of 15mm for the width and depth of the ribs 30 on the side tubular elements 20, are provided purely by way of an example. For instance, the ribs could lie in the region of 10mm to 25mm wide with a depth in the region of 10mm to 25mm also, again with any combination of width and depth. Furthermore, these figures are not intended in any way to limit the dimensions for the ribs 30 in this region of the device 1, but are provided by means of example only.

As is clear from above, the sports device 1 is designed to be inflatable. It is possible that the tubular elements 10, 20 making up both the body 2 and side regions 3 of the device 1 are all interconnected with each other. That is, only one valve need to be provided for the whole device 1, and inflation of the device 1 as a whole occurs through this one valve. This has certain advantages in that the device 1 is more easily inflated, and there is only one valve provided which helps reduce manufacturing costs. However, it is also possible for each of the tubular elements 10, 20 making up both the side 3 and body 2 regions, to be possessed of individual valves. This would mean, that for inflation the individual tubular elements 10, 20 would need separate valves and need to be inflated individually. Advantages of this system, are that should one of the tubular elements become punctured, the whole device is not deflated during use. Additionally, if the valve provided on the single valve inter-linked tubular elements 10, 20 device 1, is faulty, the entire device will deflate during use. Provision of multiple valves on each tubular element 10, 20 of the device 1, will mean that only one of the tubular elements 10, 20 deflates during use. This will further mean, that the device is more readily re-inflated after each run, or when the faulty tubular element 10, 20 requires re-inflation.

As a further possibility, the sports device 1 could be possessed of multiple material layers making up the device 1. In particular, it is possible for a single, or multiple, internal inflatable device to be provided within a more wear resistant material. In particular, the internal inflatable region, may be provided by a plastic or other polymer material such as low density polyurethane (PE), high density polyurethane (PE), poly-vinyl-chloride (PVC) or polyamide (PA), which may not be too resilient to tearing or puncturing. The outer material of the device, could be provided by a heavily wear resistant material, which may not necessarily be of an airtight construction. Furthermore, as has been detailed above, the ribs 30 provided on the underside surfaces 10, 22 of the device 1, may form part of this second outer durable layer. Furthermore, the ribs 30 could be provided by a specialist ribbed material 31, as detailed above.

As can be seen from each of Figures 1 and 2, the upper surfaces 11, 21 of the tubular elements 10, 20 may be provided with a series of handles 40. Whilst four handles are shown in the figures, two provided in the body region 2, and two provided one on each of the side tubular elements 20, this is in no way intended to be a limitation. Any number of handles 40 could be provided on the upper surface 11, 21 of the device 1, as is appropriate for control and steering of the device 1. Obviously, when a user is sitting on the upper surface 11, 21 of the device 1, it will be more comfortable for the user to be provided with such handles 40 so as to stabilize him or herself on the device 1. Additionally, the handles 40 provided on the side tubular elements 20 will advantageously allow a solid grip by the user when attempting to turn either left of right as the device 1 is running.

The above discussion is presented as a non-limiting example of a sports device 1 only. The full scope of the invention is defined in the following claims.

## Claims

1. An inflatable sports device (1), comprising a body region (2) and side regions (3), wherein:
the body region (2) comprises a plurality of inflatable tubular elements (10) of substantially the same size and similar shape, which have upper (11) and lower (12) surfaces, wherein the upper surface (11) provides a user supporting surface and the lower surface (12) is for supporting the sports device (1) on an underlying surface;
the side regions (3) comprise further inflatable tubular elements (20), which have upper (21) and lower (22) surfaces and are positioned either side of the body region (2);
**characterised in that**:
the lower surface (12) of the tubular elements (10) making up the body region (2) each extend to substantially the same level to provide a supporting surface (4) for resting the sports device (2) on the underlying surface, and the lower surfaces (21) of the side region tubular elements (20) are substantially higher and do not rest upon the underlying surface.

2. The sports device (1) of claim 1, wherein:
the tubular elements (10, 20) making up the body (2) and side (3) regions of the device (1), are all interconnected within the device to provide a single air filled cavity.

3. The sports device (1) of claim 1, wherein:
the tubular elements (10, 20) making up the body (2) and side (3) regions of the device (1), are all separate and individually inflatable.

4. The sports device (1) of any of the preceding claims, wherein:
the tubular elements (20) making up the side regions (3) are positioned at an angle with respect to the plane formed by the lower surface (12) of the tubular elements (10) in the body region (2), thereby raising the lower surface (22) away from the underlying surface.

5. The sports device (1) of any of the preceding claims, wherein:
the tubular elements (20) of the side regions (3) are one or more than one of: shorter than the tubular elements (10) of the body region (2), narrower from upper (21) to lower (22) surface than the tubular elements (10) of the body region (2), profiled to be wider at the at the front of the sports device (5) and taper off along their length to be narrower toward the rear of the sports device (6).

6. The sports device (1) of any of the preceding claims, wherein:
on the lower sides (12, 22) of some or all of the tubular elements (10, 20) there are provided ribs (30) for guiding the sports device (1).

7. The sports device (1) of any of claims 1 to 5, wherein:
on the lower sides (12, 22) of some or all of the tubular elements (10, 20) there is provided ribbed material (31), which comprises a plurality of ribs (30) for guiding the sports device (1).

8. The sports device (1) of either of claims 6 or 7, wherein:
the ribs (30) on the lower side (12) of the tubular elements (10) of the body region (2) are formed parallel with the direction of motion of the device (1), and further: the ribs (30) on the lower side (22) of the tubular elements (20) of the side region (3) are formed at an angle with respect to the direction of motion of the device (1), and point outward from the central line of the device (1) in the direction of rear (6) to front (5) of the device (1).

9. The sports device (1) of claim 8, wherein the angle between the ribs on the lower side (22) of the tubular elements (20) making up the side region (3) and the direction of motion of the device (1) lies in the range of 5° to 35°.

10. The sports device (1) of claim 8, wherein the angle between the ribs on the lower side (22) of the tubular elements (20) making up the side region (3) and the direction of motion of the device (1) lies between approximately 5° - 10°.

11. The sports device (1) of claim 8, wherein the angle between the ribs on the lower side (22) of the tubular elements (20) making up the side region (3) and the direction of motion of the device (1) lies between approximately 10° - 15°.

12. The sports device (1) of claim 8, wherein the angle between the ribs on the lower side (22) of the tubular elements (20) making up the side region (3) and the direction of motion of the device (1) lies between approximately 15° - 20°.

13. The sports device (1) of claim 8, wherein the angle between the ribs on the lower side (22) of the tubular elements (20) making up the side region (3) and the direction of motion of the device (1) lies between approximately 20° - 25°.

14. The sports device (1) of claim 8, wherein the angle between the ribs on the lower side (22) of the tubular elements (20) making up the side region (3) and the direction of motion of the device (1) lies between approximately 25° - 30°.

15. The sports device (1) of claim 8, wherein the angle between the ribs on the lower side (22) of the tubular elements (20) making up the side region (3) and the direction of motion of the device (1) lies between approximately 30° - 35°.

16. The sports device (1) of any of claims 6 to 15, wherein the ribs (30) have a width which lies in the region of 2-7mm, and a depth which lies in the region of 2-7mm.

17. The sports device (1) of any of claims 6 to 15, wherein the ribs (30) on the lower surface (12) of the tubular elements (10) in the body region (2), have a width which lies in the region of 2-7mm, and a depth which lies in the region of 2-7mm.

18. The sports device (1) of any of claims 6 to 15, wherein the ribs (30) on the lower surface (22) of the tubular elements (20) in the side region (3), have a width which lies in the region of 10-25mm, and a depth which lies in the region of 10-25mm.

19. The sports device (1) of any of the preceding claims, wherein
handles (40) are provided on the upper surfaces (11, 21) of one or both of the tubular elements (10, 20) making up the body (2) and side (3) regions of the device (1).

20. The sports device (1) of any of the preceding claims, wherein
the device is made from a durable plastic material, such as low density polyurethane (PE), high density polyurethane (PE), poly-vinyl-chloride (PVC) or polyamide (PA).

21. The sports device (1) of any of the preceding claims, wherein
the sports device is an inflatable sled, or sleigh for use on snow and/or water.
